# EUROPÄISCHE PATENTSCHRIFT

(11) **EP 0 922 883 B1**
(45) Veröffentlichungstag und Bekanntmachung des Hinweises auf die Patenterteilung: **25.06.2003**
(21) Anmeldenummer: 98119447.5
(22) Anmeldetag: 15.10.1998
(51) Int. Cl.: F16F 15/26

(54) **Ausgleichswelle, vorzugsweise für eine Hubkolben-Brennkraftmaschine**
Balancing shaft especially for an internal combustion engine
Arbre d'équilibrage en particulier pour un moteur à combustion interne

(30) Priorität: 10.12.1997 DE 19754687
(43) Veröffentlichungstag der Anmeldung: 16.06.1999
(73) Patentinhaber: Volkswagen Aktiengesellschaft, 38436 Wolfsburg (DE)
(72) Erfinder: Tremper, Karsten, 38102 Braunschweig (DE)

(56) Entgegenhaltungen:
- EP-A- 0 809 041
- FR-A- 1 555 425
- GB-A- 2 156 948
- "D-CUT TAPER GEAR" IBM TECHNICAL DISCLOSURE BULLETIN, Bd. 37, Nr. 7, 1. Juli 1994, Seite 303/304 XP000455523

## Beschreibung

Die Erfindung betrifft eine Ausgleichswellenanordnung mit mindestens einem Ausgleichsgewicht gemäß dem Oberbegriff des Patentanspruches 1.

Aus US 4 480 607, Fig. 5, ist eine aus mehreren Teilen gefügte Ausgleichswellenanordnung bekannt, an der stirnseitig ein Ausgleichsgewicht mittels axialer Verschraubung befestigt ist. Die winkelgerechte Lage von Ausgleichswelle und Ausgleichsgewicht sichert im montierten Zustand ein Paßstift, der in zur Ausgleichswellenachse parallel verlaufenden Aufnahmebohrungen in der Ausgleichswelle und in dem Ausgleichsgewicht eingreift.
Nachteilig ist, daß alle radialen Kräfte vom Fliehgewicht durch den Reibschluß zwischen Ausgleichswelle und -gewicht und den beidseitigen Formschluß des Paßstiftes zu übertragen sind, und eine zur Ausgleichswellenachse zentrierende Führung des Fliehgewichtes fehlt.

Aus EP 0 075 659 A2 ist eine weitere Ausgleichswellenanordnung für eine Brennkraftmaschine mit einem sogenannten Lancaster-Ausgleich bekannt. Auf der Ausgleichswelle ist endseitig ein Antriebsrad fliegend gelagert, während sich von dort ausgehend in der weiteren axialen Erstreckung zwei beabstandet zueinander angeordnete Lagerflächen zur rotatorischen Abstützung in Lagern auf der Oberfläche dieser Ausgleichswelle befinden.
Beidseitig zu der von dem Antriebsrad entfernt angeordneten Lagerfläche sind zwei Ausgleichsgewichte starr an der Welle befestigt.
Die den Ausgleichsgewichten zugeordnete Lagerfläche ist Teil einer reinen Radiallagerung, während an dem gegenüberliegenden Ende zu beiden Seiten der dortigen Lagerfläche je ein Bund an die Ausgleichswelle zur Axiallagerung angeformt ist.

Bei dieser bekannten Ausgleichswellenanordnung herrscht relativ große Freizügigkeit bezüglich der Ausgestaltung der Ausgleichswelle, da diese in einem separaten, außen an einem Kurbelgehäuse der Brennkraftmaschine angeflanschten Lagergehäuse angeordnet ist.

In der Vorrichtung nach der gattungsbildenden EP 0 809 041 A2 trägt die Ausgleichswelle zwischen dem Ausgleichsgewicht und dem Antriebsrad eine Lagerhülse zu ihrer Lagerung. Die von dem Ausgleichsgewicht unter dem Einfluß einer Halteschraube ausgeübten Verspannkräfte müssen über diese Lagerhülse auf das Antriebsrad übertragen werden, das sich auf einem einen kleinen Durchmesser besitzenden Kragen der Ausgleichswelle abstützt. Demgemäß sind die Verspannkräfte und die durch sie erzeugten Reibkräfte relativ niedrig. Zur Sicherung des Ausgleichsgewichts in seiner Drehlage wird daher eine Art Nut-Feder-Verbindung mit einer Scheibenfeder zwischen Welle und Ausgleichsgewicht offenbart. Nach wie vor sind jedoch die Reibkräfte zwischen Antriebsrad und Welle begrenzt. Hinzu kommt, daß durch Anordnung des Lagers zwischen Ausgleichsgewicht und Antriebsrad die Montage dieser bekannten Vorrichtung kompliziert ist.

Aus der GB 2156948 A schließlich ist eine drehfeste Verbindung zwischen einem Antriebsrad und einer Welle bekannt, die ein über eine Stiftverbindung drehfest mit dem Antriebsrad verbundenes zusätzliches Teil enthält, das mit einer Abflachung auf einer Umfangsabflachung der Welle abgestützt ist.

Der Erfindung liegt die Aufgabe zugrunde, eine gattungsgemäße Ausgleichswelle zu schaffen, welche einfach zu montieren und raumsparend ausgebildet ist.

Die Lösung dieser Aufgabe gelingt mit den Merkmalen des Patentanspruches 1. Vorteilhafte Ausgestaltungen der Erfindung sind in den abhängigen Ansprüchen angegeben.

Die Erfindung sieht eine rotatorisch formschlüssige Verbindung zwischen dem die Ausgleichswelle antreibenden Antriebsrad und der Ausgleichswelle vor. Weiterhin verspannt das Verbindungselement axial das Antriebsrad unmittelbar zwischen einer Stirnfläche der Ausgleichswelle und einer korrespondierenden, gegenüberliegenden Gegenfläche des Ausgleichsgewichtes. Mit der lösbaren Anordnung des mindestens einen Ausgleichsgewichtes ist die Voraussetzung dafür geschaffen, daß die Ausgleichswelle mit der zumindest einen Lagerfläche in korrespondierende Lager eines Gehäuses der Hubkolben-Brennkraftmaschine problemlos und kollisionsfrei eingesteckt werden kann. Anschließend kann das auf eine maximale Ausgleichswirkung optimierte Ausgleichsgewicht mittels des Verbindungselementes an der Ausgleichswelle befestigt werden. Die rotatorisch formschlüssige Verbindung zwischen Antriebsrad und Ausgleichswelle schaltet das Verbindungselement aus dem Kraftübertragungsweg zum Antrieb der Ausgleichswelle aus.
Mittels eines einzigen Verbindungselementes wird sowohl das Ausgleichsgewicht wie auch das Antriebszahnrad befestigt.
Durch das unmitellbare Verspannen des Antriebsrades zwischen Ausgleichswelle und Ausgleichsgewicht rückt das Antriebsrad zwangsläufigerweise sehr nah an das Ausgleichsgewicht heran, für dessen Rotation ein entsprechender Bauraum zur Verfügung steht. In diesem Bauraum kann dann in bauraumsparender Weise auch der Antrieb der Ausgleichswelle erfolgen, ohne daß, wie bei distanzierter Anordnung des Antriebsrades, ein weiterer Freigang für diesen Antrieb bereitgestellt werden muß.
Probleme, wie sie sich insbesondere bei Reihenbrennkraftmaschinen mit niedriger Zylinderanzahl durch die ungleichmäßige Drehanregung der Ausgleichswelle durch die Kurbelwelle bei Verwendung von z. B. eingelegten Paßfedern zur Drehmomentübertragung ergeben können, sind somit sicher vermieden.

In vorteilhafter Ausgestaltung der Erfindung ist die formschlüssige Verbindung zwischen Antriebsrad und Ausgleichswelle durch zumindest eine Abflachung mit einander zugewandten Formschlußflächen am Antriebsrad und der Ausgleichswelle gebildet.

Weiterhin ist es bevorzugt vorgesehen, daß mittels einer weiteren rotatorisch formschlüssigen Verbindung das Ausgleichsgewicht und das Antriebsrad aneinander gekoppelt sind. Dieses erfolgt wiederum bevorzugt durch eine weitere Abflachung mit einander zugewandten Formschlußflächen.

In weiterer vorteilhafter Ausgestaltung ist bzgl. der formschlüssigen Verbindung oder beider formschlüssiger Verbindungen vorgesehen, daß integral mit dem Antriebsrad eine Hülse ausgebildet ist, welche in der Art einer Innenführung die antriebsradseitigen Formschlußflächen aufweist, welche der oder den Abflachungen zugeordnet sind. Dieses hat den Vorteil einer weiteren Baulängenreduktion.

In weiterer vorteilhafter Ausgestaltung kann ein Radial- und Axiallager der Ausgleichswelle zwischen der Hülse des Antriebsrades und einem, an der Ausgleichswelle angeformten Bund ausgebildet sein.

Die sich von einem Ende der Ausgleichswelle ausgehend einstellende Abfolge von Ausgleichsgewicht, Antriebsrad und Lagerfläche gewährleistet eine beanspruchungsgerechte Spannungskonzentration durch die Fliehkraftwirkung des Ausgleichsgewichtes in einem günstigen Querschnitt der Ausgleichswelle und eine günstige Aufnahme der über das Antriebsrad eingeleiteten Radialkräfte in das benachbarte Lager. Durch dieses enge Zusammenrücken von Antriebsrad und Lager sind Verformungen im Lagerbereich weitestgehend vermieden.

Weitere Vorteile der Erfindung ergeben sich aus dem nachfolgend anhand einer Zeichnung näher erläuterten Ausführungsbeispiel.
Es zeigen:

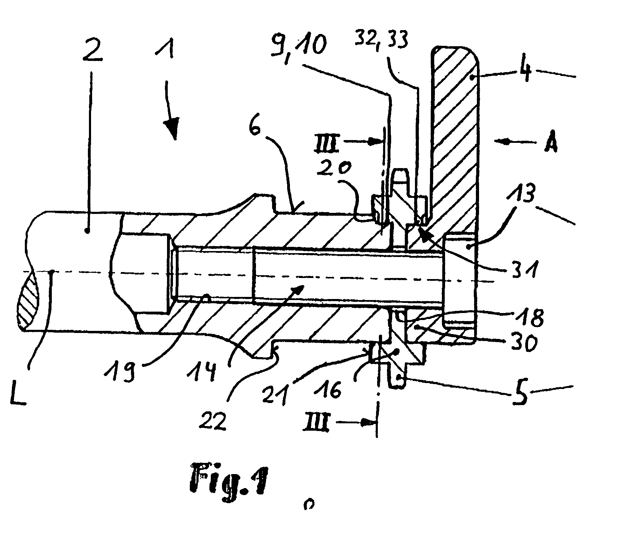

Figur 1 einen Querschnitt durch eine Ausgleichswellenanordnung,

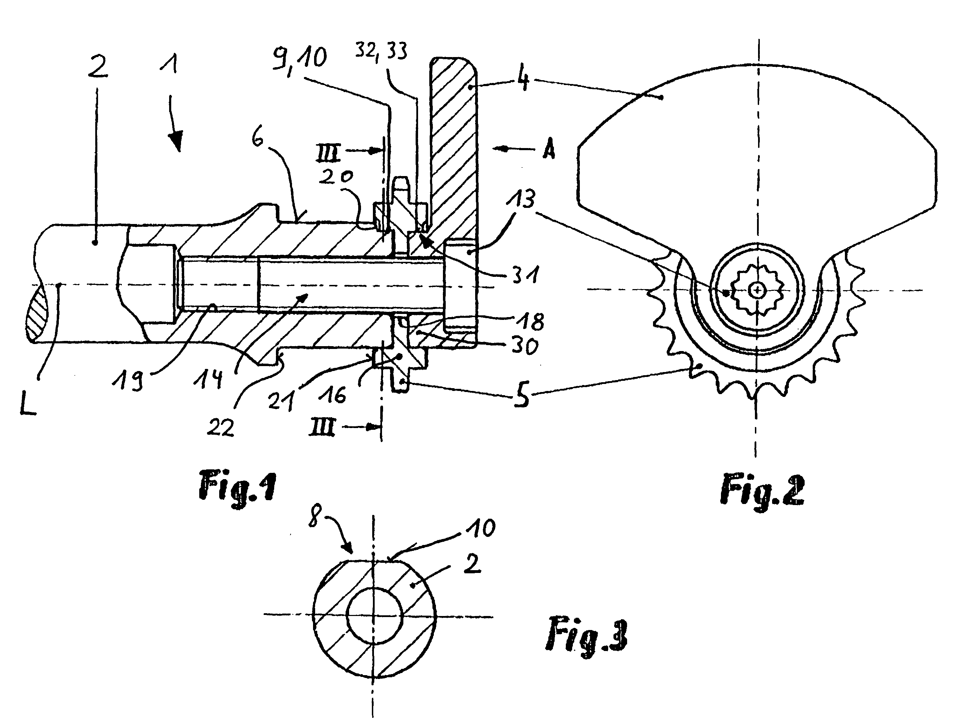

Figur 2 eine Ansicht in Pfeilrichtung A gemäß Figur 1 und
Figur 3 eine einen Schnitt entlang der Linie III-III gemäß Figur 1.

Eine insgesamt mit 1 bezeichnete Ausgleichswellenanordnung zum Ausgleich von oszillierenden Massenmomenten einer nicht gezeigten Hubkolben-Brennkraftmaschine besteht im wesentlichen aus einer Ausgleichswelle 2, einem lösbar an einer Stirnfläche der Ausgleichswelle 2 befestigten Ausgleichsgewicht 4 und einem Antriebsrad 5.
Die Ausgleichswelle 2 weist zwei axial beabstandet zueinander angeordneten Lagerflächen zur rotatorischen Abstützung der Ausgleichswelle 2 in nicht gezeigten Lagern der Hubkolben-Brennkraftmaschine auf, wobei nur die antriebsseitige Lagerfläche 6 dargestellt ist.

Das Antriebsrad 5 ist im Zuge einer Abflachung 8 mit einander zugewandten Formschlußflächen 9 bzw. 10 des Antriebsrades 5 bzw. der Ausgleichswelle 2 rotatorisch formschlüssig an der Grundwelle 2 drehfest angeordnet.

Das Antriebsrad 5 weist eine nabenartige Hülse 16 auf, welche einstückig und materialeinheitlich mit dem Antriebsrad 5 ausgebildet ist und auf ihrem Innenumfang die Formschlußfläche 9 trägt.

Das lösbare Ausgleichsgewicht 4 wird mittels eines als Paßschraube 13 ausgebildeten Verbindungselementes 14 unter axialer Verspannung des Antriebsrades 5 an der Ausgleichswelle 2 festgelegt. Die Paßschraube 13 durchsetzt dabei das Ausgleichsgewicht 4, eine Öffnung 18 in dem Antriebsrad 5 und greift mit ihrem Gewindeteil 19 axial neben der Lagerfläche 6 liegend in die Ausgleichswelle 2 ein.

Radial zwischen der Formschlußfläche 10 der Abflachung 8 und der Lagerfläche 6 erstreckt sich ein Bund 20, wobei die Hülse 16 axial zwischen dem Ausgleichsgewicht 4 und diesem Bund 20 gesichert ist.
Auf der von dem Ausgleichsgewicht 4 abgewandten Seite des Antriebsrades 5 umfaßt die Hülse 16 außerhalb des Bereiches der Abflachung 8 die Lagerfläche 6 kreisförmig und bildet mit einer Anlauffläche 21 und einem weiteren, an der Grundwelle angeformten Bund 22 eine Axiallagerung der Ausgleichswelle 2.

Zwischen Ausgleichsgewicht 4 und Antriebsrad 5 ist eine weitere, rotatorisch formschlüssige Verbindung in analoger Weise zu der zwischen dem Antriebsrad 5 und der Ausgleichswelle 2 ausgebildet. Zu diesem Zweck ist an dem Ausgleichsgewicht 4 dem Antriebsrad 5 zugewandt ein kreisringförmiger Vorsprung 30 ausgebildet, welcher im Bereich einer weiteren Abflachung 31 eine Formschlußfläche 32 trägt, welche einer korrespondierenden Formschlußfläche 33 am Innenumfang der Hülse 16 zugeordnet ist.

Die vorbeschriebene Anordnung des lösbaren Ausgleichsgewichtes 4 unter Zwischenschaltung des Antriebsrades 5 über die Abflachung 8 an der Grundwelle 2 sowie über die Abflachung 31 an dem Antriebsrad 5 stellt eine äußerst kompakte Anordnung dieser benötigten Bauelemente, insbesondere bezüglich der Längserstreckung in Richtung der Längsachse L, dar.
Bei der Montage der Ausgleichswellenanordnung 1 kann zunächst die einstückige Ausgleichswelle 2 mit ihren Lagerflächen 6 in korrespondierende Lager eingesteckt werden, bis der Bund 22 zur Anlage kommt. Anschließend kann das Antriebsrad 5 von Hand gefügt werden. Nach dem Aufsetzen des Ausgleichsgewichtes 4 und dem Festziehen der Paßschraube 13 werden im Betrieb dieser Ausgleichswelle 1 die von dem Ausgleichsgewicht 4 verursachten Fliehkräfte beanspruchungsgerecht unter Vermittlung des Vorsprunges 30 und der Hülse 16 in die Ausgleichswelle 2 eingeleitet.
Der eng benachbart zur Lagerfläche 6 angeordnete Antrieb über das Antriebsrad 5 verursacht minimierte Biegebelastungen an dieser Lagerstelle.
Die über das Antriebsrad 5 eingeleitete Antriebsleistung für die Ausgleichswelle 1 wird über die vergleichsweise großen Formschlußflächen 9 und 10 beanspruchungsgerecht und pressungsgünstig unter Vermeidung jeglicher Kerben übertragen. Da infolge dessen keine Kerbwirkung auftritt, kann der für die Ausgleichswelle 2 verwendete Werkstoff dementsprechend kostengünstig gewählt werden, etwa als Sphäroguß GGG-50.

Das Antriebsrad 5 ist mit Hülse 16 als Sinterteil ausgebildet, da hiermit die notwendigen Toleranzen kostengünstig und einfach bereitzustellen sind.

Der Formschluß zwischen Antriebsrad 5 und Ausgleichswelle 1 bzw. Ausgleichsgewicht 4 und Antriebsrad 5 kann auch über mehrere Abflachungen 8 bzw. 31 erfolgen.

## Patentansprüche

1. Ausgleichswellenanordnung (1), insbesondere für eine Hubkolben-Brennkraftmaschine, mit einer Ausgleichswelle (2), an deren einer Stirnfläche mittels eines axialen Verbindungselements (14) zumindest ein Ausgleichsgewicht (4) lösbar befestigt ist, das ein Antriebsrad (5) für die Ausgleichswelle (2) gegen einen axialen Anschlag an dieser verspannt, die ferner mindestens eine Lagerfläche (6) zur rotatorischen Abstützung an einem Lager aufweist, **dadurch gekennzeichnet, daß** infolge Anordnung der Lagerfläche (6) auf der der Stirnfläche abgekehrten Seite des Antriebsrads (5) dieses unmittelbar zwischen dem Ausgleichsgewicht (4) und dem Anschlag verspannt ist sowie zur Einleitung der von Ausgleichsgewicht (4) und Antriebsrad (5) ausgehenden Kräfte in die Ausgleichswelle (2) diese und das Antriebsrad (5) rotatonsch formschlüssig ineinander greifen (9, 10).

2. Anordnung nach Anspruch 1, **dadurch gekennzeichnet, daß** der Anschlag durch die Stirnfläche gebildet ist.

3. Anordnung nach Anspruch 1 oder 2, **dadurch gekennzeichnet, daß** die Lagerfläche (6) dem Antriebsrad (4) unmittelbar benachbart ist.

4. Anordnung nach einem der Ansprüche 1 bis 3, **dadurch gekennzeichnet, daß** die formschlüssige Verbindung durch zumindest eine Abflachung (8) mit einander zugewandten Formschlußflächen (9, 10) des Antriebsrades (5) und der Ausgleichswelle (2) gebildet ist.

5. Anordnung nach Anspruch 4, **dadurch gekennzeichnet, daß** das Antriebsrad (5) auf der Ausgleichswelle (2) zwischen dem Ausgleichsgewicht (4) und einem im Bereich der Abflachung (8) radial zwischen der grundwellenseitigen Formschlußfläche (10) und der Lagerfläche (6) gebildeten Bund (20) der Ausgleichswelle (2) axial gesichert angeordnet ist.

6. Anordnung nach einem oder mehreren der vorhergehenden Ansprüche, **gekennzeichnet durch** eine weitere rotatorisch formschlüssige Verbindung zwischen Antriebsrad (5) und Ausgleichsgewicht (4), gebildet **durch** eine weitere Abflachung (31) mit einander zugewandten Formschlußflächen (32, 33) des Ausgleichsgewichts (4) und des Antriebsrades (5).

## Claims

1. Balancing shaft arrangement (1), in particular for a reciprocating piston internal combustion engine, having a balancing shaft (2) to one of whose end faces at least one balancing weight (4) is detachably fastened by means of an axial connecting element (14), said balancing weight clamping a drive wheel (5) for the balancing shaft (2) against an axial stop thereon, said balancing shaft (2) also having at least one bearing face (6) for providing rotational support on a bearing, **characterized in that** owing to the arrangement of the bearing face (6) on the side of the drive wheel (5) facing away from the end face said drive wheel (5) is clamped directly between the balancing shaft (4) and the stop, and, in order to apply the forces coming from the balancing weight (4) and drive wheel (5) into the balancing shaft (2), the latter and the drive wheel (5) engage (9, 10) in one another rotationally in a positively locking fashion.

2. Arrangement according to Claim 1, **characterized in that** the stop is formed by the end face.

3. Arrangement according to Claim 1 or 2, **characterized in that** the bearing face (6) is directly adjacent to the drive wheel (4).

4. Arrangement according to one of Claims 1 to 3, **characterized in that** the positively locking connection is formed by at least one flattened portion (8) with positively locking faces (9, 10) of the drive wheel (5) and of the balancing shaft (2), said faces (9, 10) being turned towards one another.

5. Arrangement according to Claim 4, **characterized in that** the drive wheel (5) is arranged axially secured on the balancing shaft (2) between the balancing weight (4) and a collar (20) of the balancing shaft (2), said collar (20) being formed in the region of the flattened portion (8) in a radial position between the fundamental-wave-end positively locking face (10) and the bearing face (6).

6. Arrangement according to one or more of the preceding claims, **characterized by** a further positively locking rotational connection between the drive wheel (5) and balancing weight (4), formed by a further flattened portion (31) with positively locking faces (32, 33) of the balancing weight (4) and of the drive wheel (5), said faces (32, 33) being turned towards one another.

## Revendications

1. Agencement d'arbre d'équilibrage (1), en particulier pour un moteur alternatif à combustion interne, comprenant un arbre d'équilibrage (2) sur une face de bout duquel au moins un poids d'équilibrage (4) est fixé de manière détachable au moyen d'un élément de liaison axial (14), lequel poids d'équilibrage serre une roue d'entraînement (5) pour l'arbre d'équilibrage (2) contre une butée axiale sur celui-ci, l'arbre d'équilibrage présentant en outre au moins une face d'appui (6) pour le support en rotation sur un palier, **caractérisé en ce que** du fait de l'agencement de la face d'appui (6) sur le côté de la roue d'entraînement (5) opposé à la face de bout, cette roue d'entraînement est directement serrée entre le poids d'équilibrage (4) et la butée et pour l'introduction des forces issues du poids d'équilibrage (4) et de la roue d'entraînement (5) dans l'arbre d'équilibrage (2), celui-ci et la roue d'entraînement (5) viennent en prise l'un dans l'autre (9, 10) par engagement positif à rotation.

2. Agencement selon la revendication 1, **caractérisé en ce que** la butée est formée par la face de bout.

3. Agencement selon la revendication 1 ou 2,
**caractérisé en ce que** la face d'appui (6) est directement adjacente à la roue d'entraînement (4).

4. Agencement selon l'une quelconque des revendications 1 à 3, **caractérisé en ce que** la liaison par engagement positif est formée par au moins un méplat (8) avec des faces d'engagement positif (9, 10) tournées l'une vers l'autre de la roue d'entraînement (5) et de l'arbre d'équilibrage (2).

5. Agencement selon la revendication 4, **caractérisé en ce que** la roue d'entraînement (5) est disposée de manière fixe axialement sur l'arbre d'équilibrage (2) entre le poids d'équilibrage (4) et un épaulement (20) de l'arbre d'équilibrage (2) formé dans la région du méplat (8) radialement entre la face d'engagement positif (10) du côté de l'arbre de base et la face d'appui (6).

6. Agencement selon l'une ou plusieurs des revendications précédentes, **caractérisé par** une liaison par engagement positif à rotation supplémentaire entre la roue d'entraînement (5) et le poids d'équilibrage (4), formée par un autre méplat (31) avec des faces d'engagement positif (32, 33) tournées l'une vers l'autre du poids d'équilibrage (4) et de la roue d'entraînement
(5).
